# EUROPÄISCHE PATENTSCHRIFT

(11) **EP 3 290 635 B1**
(45) Veröffentlichungstag und Bekanntmachung des Hinweises auf die Patenterteilung: **09.01.2019**
(21) Anmeldenummer: 17177986.1
(22) Anmeldetag: 27.06.2017
(51) Int. Cl.: F01D 5/06, F16D 11/00

(54) **ROTORSCHEIBE MIT STIRNVERZAHNUNG SOWIE ROTOR**
ROTOR DISC WITH TOOTHING AND ROTOR
DISQUE DE ROTOR COMPRENANT UNE DENTURE FRONTALE ET ROTOR

(30) Priorität: 30.08.2016 US 201615251421
(43) Veröffentlichungstag der Anmeldung: 07.03.2018
(73) Patentinhaber: Siemens Aktiengesellschaft, 80333 München (DE)
(72) Erfinder: Kolk, Karsten, 45479 Mülheim a.d. Ruhr (DE); Kampka, Kevin, 45478 Mülheim a. d. Ruhr (DE); Matthews, Roger, Greer, SC 29651 (US)

(56) Entgegenhaltungen:
- US-A- 2 427 614
- US-A- 2 458 149
- US-A- 5 205 716
- US-A- 5 536 144
- US-A1- 2012 201 658

## Beschreibung

Die Erfindung betrifft eine Rotorscheibe zur Verwendung bei einem Rotor, wobei zumindest auf einer Seite der Rotorscheibe eine Stirnverzahnung zur Drehmomentenübertragung angeordnet ist. Die einzelnen Zähne der Stirnverzahnung sind hierbei spiegelbildlich zu einer jeweiligen Mittelebene ausgeführt.

Aus dem Stand der Technik, wie zum Beispiel aus US2458149A, US5205716A, US5536144A, US2012/201658A1 und US2427614A, sind verschiedene Ausführungsformen von Rotorscheiben bekannt, die unterschiedliche Bauweisen zur Drehmomentenübertragung aufweisen. Beispielsweise können Rotorscheiben miteinander verschweißt werden. Die geforderte Demontierbarkeit des Rotors zur Inspektion der Rotorscheiben verbietet jedoch in aller Regel eine Schweißverbindung. Daher werden vielfach reibschlüssige Flanschverbindungen eingesetzt, bei denen die Rotorscheiben unter hinreichender Spannung miteinander über Flansche verbunden sind. Wenngleich diese Ausführungsform eine einfache Herstellung der Rotorscheiben begünstigt, so zeigt sich hier jedoch als Nachteil, dass zur Zentrierung der Rotorscheiben zueinander ineinander zu fügende Zylinder mit hoher Genauigkeit notwendig sind. Weiterhin wird zur Fügung der Rotorscheiben bei einer Presspassung entsprechende Erwärmung des einen bzw. Abkühlung des anderen Bauteils notwendig.

Als weitere Verbindungsart werden bei Rotorscheiben Stirnverzahnungen eingesetzt. Diese hat den besonderen Vorteil, dass der Rotor ohne weiteres jederzeit zerlegt und wiederum montiert werden kann, als auch desweiteren keine thermische Behandlungen zur Montage bzw. Demontage notwendig sind. Weiterhin kann durch eine geeignete Wahl der Stirnverzahnung ebenso eine Zentrierung der Bauteile zueinander erzielt werden. Darüber hinaus begünstigt die Stirnverzahnung die sichere und zuverlässige Drehmomentenübertragung von der Rotorscheibe. Wenngleich die Stirnverzahnung eine zuverlässige Verbindung von Rotorscheiben ermöglicht und hierbei eine einfache und zuverlässige Montage und Demontage ermöglicht, so weist jedoch eine reguläre Stirnverzahnung je nach Verwendungsart und je nach Art der Befestigung zwei Nachteile auf:
Insbesondere bei der Verbindung von Rotorscheiben über Flanschverbindungen tritt das Problem auf, dass eine ungleichmäßige Flächenpressung in der Stirnverzahnung vorhanden ist. Wird zur Behebung dieses Mangels eine Anpassung der Stirnverzahnung zur optimalen Flächenpressung in den Zahnflanken im verschraubten Zustand vorgenommen, so tritt im Gegenzug das Problem auf, das die Zentrierung beim Aneinanderfügen von Rotorscheiben nicht mit hoher Genauigkeit gewährleistet werden kann.

Zum anderen tritt insbesondere bei thermisch bedingten Dehnungen in den Rotorscheiben das Problem auf, dass Relativbewegungen in der Stirnverzahnung benachbarter Rotorscheiben auftreten können. Die reguläre Stirnverzahnung kann hierbei zwar bestens die Zentrierung gewährleisten, jedoch gefährden unkontrollierte Dehnungen je nach Verbindungsart die Befestigung der Rotorscheiben aneinander.

Aufgabe der vorliegenden Erfindung ist es daher die Rotorscheiben vorteilhaft dahingehend zu koppeln, dass die Zentrierung gewährleistet wird, dabei eine gute Lastverteilung in den Zahnflanken erreicht wird und thermische Dehnungen einer Rotorscheibe nicht zu unzulässigen Relativbewegungen gegenüber der anderen Rotorscheibe führen.

Die gestellte Aufgabe wird durch eine erfindungsgemäße Ausführungsform nach der Lehre der unabhängigen Ansprüche 1 und 9 gelöst. Vorteilhafte Ausführungsformen sind Gegenstand der Unteransprüche.

Die gattungsgemäße Rotorscheibe ist bestimmungsgemäß Bestandteil eines Rotors, welcher insbesondere bei einer Gasturbine eingesetzt wird. Unabhängig hiervon kann die erfindungsgemäße Lösung ebenso bei anderen Rotoren, beispielsweise einer Dampfturbine, eingesetzt werden. Zumindest weist die Rotorscheibe auf einer Seite eine Stirnverzahnung zur Drehmomentenübertragung auf. Die Stirnverzahnung wird hierbei gebildet von einer Mehrzahl im Umfang verteilter Zähne. Diese weisen hierbei in Verlängerung auf die Rotorachse. Entsprechend sind die beiden Zahnflanken eines jeweiligen Zahns gegenüberliegend einer Mittelebene durch die Zahnmitte und durch die Rotorachse ausgerichtet. D. h. die Zähne verlaufen - bei einer Betrachtung längs der Rotorachse - jeweils zunächst einmal im Wesentlichen radial zur Rotorachse.

Erfindungsgemäß wird nunmehr die Verbindung von Rotorscheiben durch Einsatz einer Stirnverzahnung dadurch verbessert, indem die Zahnflanken einen von einer radialen Richtung abweichenden Verlauf aufweisen. Hierzu wird der Zahn in einem Querschnitt senkrecht zur Rotorachse durch die Zahnflanken betrachtet, d.h. die sich ergebenden Schnittkurven durch die beiden Zahnflanken eines jeweiligen Zahns. Erfindungsgemäß weisen die Schnittkurven der Zahnflanken im Querschnitt einen von einer radialen Richtung abweichenden Verlauf auf. Hierbei ist es zunächst unerheblich, welchen exakten Verlauf die Zahnflanken aufweisen.

Durch eine erste vorteilhafte Ausführungsform der Zahnflanken mit einem von einer Abweichung von einem radialen Verlauf wird einerseits eine Anpassung an die bei einer Verschraubung auftretenden Spannungen möglich, so dass eine vorteilhafte Flächenpressung erzielt wird und dennoch eine Zentrierung gewährleistet ist. Bei der Forderung nach einer möglichst exakten Zentrierung beim Aneinanderfügen der Stirnverzahnung kann naheliegend keine vollständig gleichmäßige Flächenpressung über die gesamte Stirnverzahnung erreicht werden. Vielmehr stellt die Anpassung an eine gleichmäßige Flächenpressung und der Forderung nach einer Anfangszentrierung beim Aneinanderfügen einen Kompromiss dar, der bestmöglich die beiden Forderungen durch einen von der radialen Richtung abweichenden Verlauf vereint.

Durch eine zweite vorteilhafte Ausführungsform der Zahnflanken mit einem von einer Abweichung von einem radialen Verlauf wird anderseits eine Verspannung der Rotorscheiben möglich, welche thermische Relativbewegungen begrenzen kann, d.h. unzulässige Relativbewegungen werden innerhalb der Stirnverzahnung unterbunden. Diesbezüglich ist es unerheblich, ob die Formgebung der Stirnverzahnung eine gewisse Relativbewegung der beiden Rotorscheiben zueinander ermöglicht, sofern dieses keine bleibende Schädigung der Verbindung der Rotorscheiben zur Folge hat.

Bei der konkreten Festlegung der Formgebung der Zahnflanken ist dabei vorteilhaft zu berücksichtigen, dass der Sperrabschnitt nicht eine Zentrierung der Rotorscheiben zueinander mittels des Zentrierabschnitts verhindert.

Eine vorteilhafte Rotorscheibe weist einen innenliegenden Scheibenabschnitt, der primär zur Stabilisierung und Lastaufnahme dient, einen Mittelabschnitt, an dessen stirnseitigem Ende die Stirnverzahnung angeordnet ist, sowie einen außen liegenden Befestigungsabschnitt auf. Im Befestigungsabschnitt sind im Umfang verteilt eine Mehrzahl Schaufelhaltenuten angeordnet, welche sich in besonders bevorzugter Weise axial erstrecken. Dieses ermöglicht die Anbringung von Laufschaufeln an den Schaufelhaltenuten.

Weiterhin weist eine besonders vorteilhafte Rotorscheibe einen sich axial erstreckenden Hülsenabschnitt auf, an dessen Ende sich ein Anschlussflansch befindet. Hierbei erstreckt sich der Anschlussflansch vom Hülsenabschnitt radial nach innen und/oder nach außen. Dabei ist vorgesehen, dass die Stirnverzahnung sich an der Stirnseite des Anschlussflansches befindet. Dabei bildet in vorteilhafter Weise der Hülsenabschnitt mit dem Anschlussflansch einen Teil des Mittelabschnitts.

Um eine vorteilhafte Verbindung von Rotorscheiben zu ermöglichen ist hierbei vorgesehen, dass im Anschlussflansch im Umfang verteilt eine Mehrzahl Befestigungsbohrungen vorhanden ist. Somit wird eine Verbindung von Rotorscheiben am Anschlussflansch durch eine Verschraubung ermöglicht.

In besonders vorteilhafter Weise verläuft der Zahn, d.h. die von der Rotorscheibe wegweisende Zahnspitze des jeweiligen Zahns radial zur Rotorachse. Weiterhin ist in vorteilhafter Weise vorgesehen, dass die jeweiligen Zähne der Stirnverzahnung symmetrisch zu einer Mittelebene längs der Rotorachse ausgeführt sind. Die beiden Schnittkurven des jeweiligen Zahns sind dabei spiegelsymmetrisch zu einer radialen Linie.

Die Ausführungsform der Zähe bzw. Zahnflanken ist zunächst unerheblich, sofern die Zahnflanken einen von der Radialrichtung abweichenden Verlauf aufweisen. Erfindungsgemäß unterteilen sich die Zähne in einen Zentrierabschnitt sowie einen sich radial außerhalb und/oder radial innerhalb an den Zentrierabschnitt anschließenden Sperrabschnitt. Dabei ist vorgesehen, dass sich die Zahnflanken im Zentrierabschnitt im Wesentlichen radial erstrecken. Wesentlich ist, dass mit dem Zentrierabschnitt bereits beim Fügen von Rotorscheiben aneinander eine Zentrierung der Bauteile zueinander ermöglicht wird. Hierbei bildet die Stirnverzahnung im Zentrierabschnitt in besonders vorteilhafter Weise eine Hirth-Verzahnung. Demgegenüber verlaufen die Zahnflanken im Sperrabschnitt abweichend zum Verlauf im Zentrierabschnitt. Hieraus resultierend weisen in einem Querschnitt senkrecht zur Rotorachse betrachtet die Zahnflanken, d.h. die Schnittkurven der Zahnflanken im Querschnitt, zueinander einen kleineren oder größeren (bzw. kleiner werdenden oder größer werdenden) Abstand auf, als es dem im Wesentlichen radialen Verlauf im Zentrierabschnitt entspricht.

Die erfindungsgemäße Ausführungsform der Stirnverzahnung unterteilt in einen Zentrierabschnitt und in einen Sperrabschnitt mit dem Zentrierabschnitt ermöglicht eine optimale Zentrierung von Rotorscheiben zueinander bereits beim Fügen der Bauteile.

Weiterhin ermöglicht der Sperrabschnitt einerseits eine optimale Anpassung an die bei der Befestigung auftretenden Verformungen und somit für eine optimale Flächenpressung in den Zahnflanken.

Zum anderen ermöglicht der Sperrabschnitt eine vorteilhafte Kopplung von benachbarten Rotorscheiben an der Stirnverzahnung, so dass bei thermisch bedingten Radialbewegungen der einen Rotorscheibe relativ zur benachbarten Rotorscheibe eine Kopplung der Rotorscheiben dergestalt miteinander erfolgt, dass die radiale Bewegung des einen vorteilhaften Anschlussflansches zur Mitnahme des radial über die Stirnverzahnung gekoppelten Anschlussflansches führt. Somit wird eine Schädigung von möglichen Verbindungselementen durch thermische Relativbewegungen unterbunden.

Die Ausführungsform der Zahnflanken im Sperrabschnitt ist zunächst unerheblich, wobei in einer ersten vorteilhaften Variante die Zahnflanken im Querschnitt betrachtet, d.h. die Schnittkurven, wiederum einen linearen Verlauf aufweisen. D.h. im Querschnitt betrachtet ist ein Öffnungswinkel zwischen den - vorteilhaft spiegelbildlich zueinander angeordneten - Zahnflanken, d.h. den Schnittkurven, im Sperrabschnitt abweichend vom Öffnungswinkel im Zentrierabschnitt. In einer zweiten vorteilhafter Variante ist es möglich, die Zahnflanken im Sperrabschnitt mit einem bogenförmigen Verlauf zu versehen. Darüber hinaus ist naheliegend eine Kombination von linearem und bogenförmigem Verlauf möglich.

Betrachtet man die Zahnspitzen der einzelnen Zähne der Stirnverzahnung, insbesondere bei vorteilhaft spiegelbildlich zur Mittelebene ausgeführten Zahnflanken, in einem Längsschnitt durch die Zahnspitze und der Rotorachse und wird hierbei eine gleichbleibenden Form der Zahnspitzen gewählt oder wird eine angenommene gleichbleibende Zahnspitze als Verlängerung bzw. Kürzung der Zahnflanken betrachtet, so führt die Trennung in einen Zentrierabschnitt und einen Sperrabschnitt zu einem im Wesentlichen radialen Verlauf der Zahnspitzen im Zentrierabschnitt sowie im Sperrabschnitt zu einem bogenförmigen Verlauf der Zahnspitzen und/oder einem abweichend von der Richtung im Zentrierabschnitt geneigten, d. h. einem linearen radial-axialen Verlauf der Zahnspitzen.

Hinsichtlich des Zentrierabschnitts kann in einer ersten vorteilhaften Ausführung vorgesehen sein, dass die Zahnspitzen radial zur Rotorachse verlaufen. Bei einem besonders vorteilhaft radialen Verlauf der Mitte der Verzahnung führt eine gleichbleibende Zahnspitze zur einer nach außen zunehmenden Höhe der Zähne und somit einem geringfügig abweichenden Verlauf der Zahnspitze vom radialen Verlauf. Bei einem Außenradius R des Zentrierabschnitts und einer Zahnhöhe h beträgt die Abweichung aus der radialen Richtung in guter Näherung α = arcsin(h/2xR). Im Falle einer Rotorscheibe einer Gasturbine beträgt hierbei die Neigung der Zahnspitze im Zentrierabschnitt mit radialem Verlauf der Verzahnungsmitte analog bekannter Ausführungsformen von ("ohne Knick" durchlaufenden) Stirnverzahnungen ungefähr 0,2 Grad bis 0,8 Grad. In dritter Ausführung kann vorgesehen sein, dass der Zahngrund zwischen zwei Zähnen radial zur Rotorachse verläuft, wobei sich die Neigung der Zahnspitze relativ zur radialen Richtung entsprechend zur zweiten Ausführung verdoppelt. Naheliegend kann die Neigung der Zahnspitze in einem Bereich ebenso zwischen der ersten Ausführung und der dritten Ausführung gewählt werden.

In besonders vorteilhafter Weise wird durch die Formgebung der Zahnflanken im Sperrabschnitt eine Mitnahme des benachbarten Flansches der Stirnverzahnung bei thermischer Relativbewegung erzielt. Daher ist es besonders vorteilhaft, wenn die (gleichbleibenden oder angenommen gleichbleibenden) Zahnspitzen im Sperrabschnitt mindestens 0,25 Grad geneigt gegenüber dem Zentrierabschnitt verlaufen. Hierbei wird in besonders vorteilhafter Weise eine Neigung von mindesten 0,5 Grad gewählt.

Anderseits ist die Herstellbarkeit der Stirnverzahnung und die dabei notwendige Genauigkeit zu beachten. Daher sollte in vorteilhafter Weise die Neigung 15 Grad nicht überschreiten. In besonders vorteilhafter Weise beträgt die Neigung im Sperrabschnitt relativ zum Zentrierabschnitt maximal 5 Grad.

Im Falle eines bogenförmigen Verlauf der gleichbleibenden Zahnspitze oder als gleichbleibend angenommenen fiktiven Zahnspitze wird die Neigung einer Tangente an dem Verlauf der Zahnspitze zur Bestimmung der Winkelabweichung zum geradlinigen Verlauf im Zentrierabschnitt herangezogen.

Ausgehend von einer erfindungsgemäßen Rotorscheibe wird die Bildung eines erfindungsgemäßen Rotors möglich, welcher zumindest eine erste Rotorscheibe und zumindest eine zweite Rotorscheibe umfasst, welche beide jeweils eine Stirnverzahnung aufweisen. Dabei ist vorgesehen, dass die Stirnverzahnung der ersten Rotorscheibe mit der Stirnverzahnung der zweiten Rotorscheibe zusammenwirkt und eine Zentrierung der Rotorscheiben zueinander bewirkt sowie eine Übertragung von Drehmomenten ermöglicht. Dabei weist zumindest eine Rotorscheibe eine Stirnverzahnung gemäß vorheriger Beschreibung auf.

In besonders vorteilhafter Weise werden hierbei beide Rotorscheiben mit Stirnverzahnungen gemäß vorheriger Beschreibung ausgeführt. Es ist offensichtlich, dass in diesem Ausführungsfall der von der radialen Richtung abweichende Verlauf der Zahnflanken bei Betrachtung der jeweiligen Stirnverzahnung entgegengesetzt ausgeführt sein muss, so dass die entsprechende Kopplung möglich ist. D.h. wird im Sperrabschnitt der ersten Rotorscheibe eine von der Rotorscheibe wegweisende Neigung gewählt, muss naheliegend bei der zweiten Rotorscheibe eine zur Rotorscheibe weisende Neigung vorhanden sein.

Zur Verbindung der beiden Rotorscheiben werden in besonders bevorzugter Weise Befestigungsbolzen eingesetzt, welche die Befestigungsbohrungen des ersten Anschlussflansches der ersten Rotorscheibe und/oder des zweiten Anschlussflansches der zweiten Rotorscheibe durchdringen. Es kann auch vorgesehen sein, dass Schrauben durch einen Anschlussflansch in Gewindebohrungen im anderen Anschlussflansch eingeschraubt werden. Somit kann eine besonders vorteilhafte Verbindung der Rotorscheiben bewirkt werden, wobei eine Schädigung der Befestigungsbolzen aufgrund thermischer Relativbewegung durch die erfindungsgemäße Ausführung der Stirnverzahnung verhindert werden kann.

Zur Realisierung einer zuverlässigen Zentrierung der Rotorscheiben zueinander ist in besonders vorteilhafter Weise vorgesehen, dass bei der Montage der Rotorscheiben aneinander eine Zentrierung durch den Zentrierabschnitt bewirkt wird, wobei in dem nicht befestigten Zustand zumindest ein minimaler Spalt im Sperrabschnitt zwischen den ersten Zahnflanken der Stirnverzahnung der ersten Rotorscheibe und den zweiten Zahnflanken der Stirnverzahnung der zweiten Rotorscheibe vorhanden ist.

Die Ausbildung des Spaltes zwischen den Stirnverzahnungen, insbesondere im Bereich des Sperrabschnitts kann auf unterschiedliche Weise erfolgen. Davon ausgehend, dass ein Zentrierabschnitt ohne Spalt vorhanden ist, ist es offensichtlich, dass im Übergang zwischen dem Zentrierabschnitt und dem Sperrabschnitt wahlweise ein zusätzlicher Freiraum notwendig ist oder ein allmählicher Übergang vom Zentrierabschnitt in den Sperrabschnitt stattfindet. Beispielsweise kann zwischen Zentrierabschnitt und Sperrabschnitt eine Ringnut oder sonstige die Zahnflanken freistellende Aussparung vorgesehen sein. Auch kann vorgesehen sein, dass die Zähne der einen Stirnverzahnung betrachtet in einem Längsschnitt zwischen dem Zentrierabschnitt und dem Sperrabschnitt einen kleineren Außenradius aufweisen als gegenüberliegend der Innenradius der Zähne der anderen Stirnverzahnung.

Unabhängig von der konkreten Ausführung ist es zumindest nach einem Übergang vom Zentrierabschnitt in den Sperrabschnitt vorteilhaft, einen Spalt im Sperrabschnitt von zumindest 0,01 mm vorzusehen. Besonders vorteilhaft ist es hierbei jedoch, wenn der Sperrabschnitt zumindest einen Spalt von 0,1 mm bildet. Dieses gewährleistet ohne Einfluss durch den Sperrabschnitt die Zentrierung der Rotorscheiben zueinander durch den Zentrierabschnitt.

Weiterhin ist es vorteilhaft, wenn der Spalt im Sperrabschnitt maximal 2 mm beträgt. Durch die Wahl eines maximal 2 mm großen Spaltes wird sichergestellt, dass eine effektive Sperrung der Flansche der benachbarten Rotorscheiben zueinander erfolgt und somit eine Verbindung der Rotorscheiben beispielsweise über die Befestigungsbolzen nicht geschädigt werden. Dabei ist es besonders vorteilhaft, wenn der Spalt im Sperrabschnitt maximal 0,2 mm beträgt.

Hinsichtlich der konkreten Gestaltung des Spaltes zwischen der Stirnverzahnung der ersten Rotorscheibe und der Stirnverzahnung der zweiten Rotorscheibe im Sperrabschnitt gibt es verschiedene Möglichkeiten zur Realisierung, wobei in einer ersten vorteilhaften Ausführungsform ein sich nach außen hin kontinuierlich vergrößernder Spalt verwendet wird. Dabei kann beispielsweise vorgesehen sein, dass im Anschluss an den Zentrierabschnitt und einem Übergang in den Sperrabschnitt ein minimaler Spalt von 0,01 mm vorgesehen wird, welcher sich im Verlauf des Sperrabschnitts auf beispielsweise 2 mm vergrößert.

Diese Ausführung der Stirnverzahnungen der benachbarten Rotorscheiben ermöglicht insbesondere eine allmähliche Erhöhung der Pressung in der Verbindung bei relativen radialen thermischen Dehnungen, so dass der jeweils benachbarte Flansch kontinuierlich in radialer Richtung belastet wird. Anzumerken sei, dass die zusätzliche Belastung in radialer zwar nicht gewünscht wird, aber somit das Ziel erreicht wird, dass die Verbindung der Rotorscheiben, insbesondere über Flanschverschraubungen, nicht geschädigt wird.

Bei Einsatz eines sich kontinuierlich vergrößernden Spaltes kann in weiterer besonders vorteilhafter Ausführungsform eine Variation der Spaltweite im Umlauf um die Rotorachse vorgenommen werden. Beispielsweise ist es vorteilhaft möglich, die Aufweitung des Spaltes im Bereich der Befestigungsbolzen größer zu wählen als im Bereich zwischen zwei Befestigungsbolzen. Somit wird ein möglicher Ausgleich durch die Verformung der Rotorscheiben beim Anziehen der Befestigungsbolzen erzielt.

In einer weiteren besonders vorteilhaften Ausführungsform wird der Spalt über den Verlauf im Wesentlichen konstant gewählt. Eine derartige Ausführungsform ermöglicht es in besonders bevorzugter Weise, dass sich die Rotorscheiben beispielsweise aufgrund thermischer Dehnungen bis zu einem bestimmten Maß zueinander bewegen können, wobei bei einem Grenzwert mit Anlage der Zahnflanken im Sperrabschnitt eine unmittelbare Blockierung einer weiteren Radialbewegung des einen Anschlussflansches relativ zum benachbarten Anschlussflansch erfolgt. Hierdurch wird effektiv eine Schädigung der Befestigungsmittel bei Erreichen einer kritischen Grenze verhindert. Dabei kann in weiterer Ausführungsform vorgesehen sein, dass sich der Spalt im nicht verspannten Zustand geringfügig aufweitet, wobei nach dem Verspannen der Rotorscheiben der Spaltverlauf im Wesentlichen konstant ist.

In den nachfolgenden Figuren werden zwei beispielhafte Ausführungsformen für einen Rotor sowie zugehörig zwei beispielhafte Ausführungsformen der Zahnflanken skizziert. Es zeigen:
- FIG 1: ein erstes Ausführungsbeispiel eines Rotors mit sich aufweitendem Spalt in der Stirnverzahnung;
- FIG 2: ein zweites Ausführungsbeispiel eines Rotors mit einem konstanten Spalt in der Stirnverzahnung;
- FIG 3: einen Längsschnitt durch die Stirnverzahnung;
- FIG 4: ein Querschnitt durch zwei Zähne der Stirnverzahnung zu Fig. 3;
- FIG 5: einen weiteren Längsschnitt durch eine alternative Stirnverzahnung mit bogenförmigem Verlauf;
- FIG 6: einen Querschnitt durch zwei Zähne der Stirnverzahnung zu FIG 5.

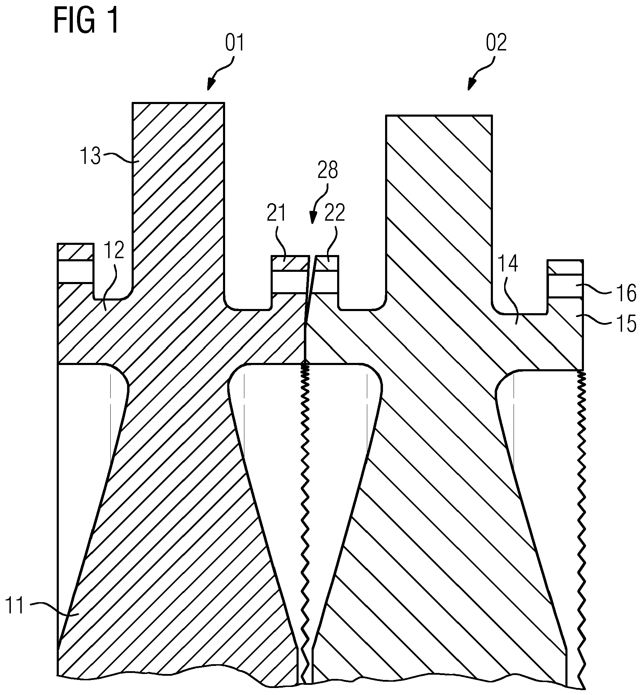

In der FIG 1 wird ein erstes Ausführungsbeispiel für einen erfindungsgemäßen Rotor skizziert. Zu erkennen sind zwei exemplarisch dargestellte Rotorscheiben 01 und 02, welche 01, 02 über eine Stirnverzahnung 21, 22 miteinander verbunden sind. Die Rotorscheiben 01, 02 weisen jeweils einen Scheibenabschnitt 11, einen Mittelabschnitt 12, sowie einen Befestigungsabschnitt 13 auf. Im Mittelabschnitt 12 ist beidseitig der Mitte jeweils ein Hülsenabschnitt 14 angeordnet, an dessen Ende sich jeweils ein Anschlussflansch 10 befindet. Im Anschlussflansch 15 befinden sich im Umfang verteilt jeweils Befestigungsbohrungen 16. Die Verbindungen der beiden Rotorscheiben 01, 02 erfolgt über die stirnseitig am Anschlussflansch 15 vorhandenen Stirnverzahnungen 21, 22. In diesem Ausführungsbeispiel ist vorgesehen, dass die Stirnverzahnung 21, 22 der Rotorscheiben 01, 02 einen Zentrierabschnitt 41 sowie einen Sperrabschnitt 42 aufweisen, wobei im Sperrabschnitt 42 sich ein Spalt 28 ausbildet, der 28 sich ausgehend vom Zentrierabschnitt 41 kontinuierlich aufweitet.

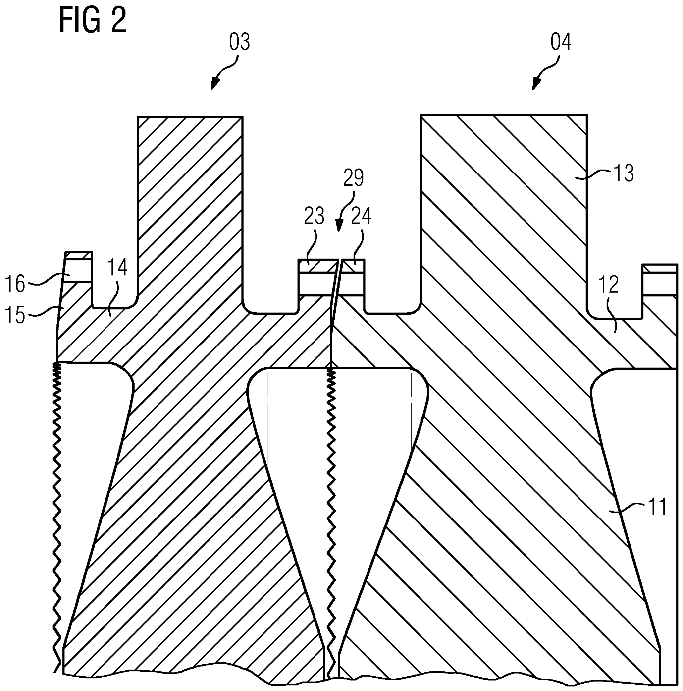

Ein weiteres Ausführungsbeispiel zeigt hierzu die FIG 2 mit ebenso zwei Rotorscheiben 03 und 04, welche 03, 04 übereinstimmend einen Scheibenabschnitt 11, einen Mittelabschnitt 12 sowie einen Befestigungsabschnitt 13 aufweisen. Wiederum sind die Rotorscheiben über jeweilige Anschlussflansche 15, die 15 an Hülsenabschnitten 14 angeordnet sind, verbunden. In den Anschlussflanschen 15 befinden sich wiederum im Umfang verteilt die Befestigungsbohrungen 16. Wiederum sind die Rotorscheiben 03, 04 über Stirnverzahnungen 23, 24 miteinander verbunden, die 23, 24 sich in einen Zentrierabschnitt 41 und einen Sperrabschnitt 42 aufteilen. Im Gegensatz zum vorherigen Ausführungsbeispiel ist nunmehr vorgesehen, dass der Spalt 29 im Sperrabschnitt 42 zwischen den Stirnverzahnungen 23, 24 im Wesentlichen konstant ist.

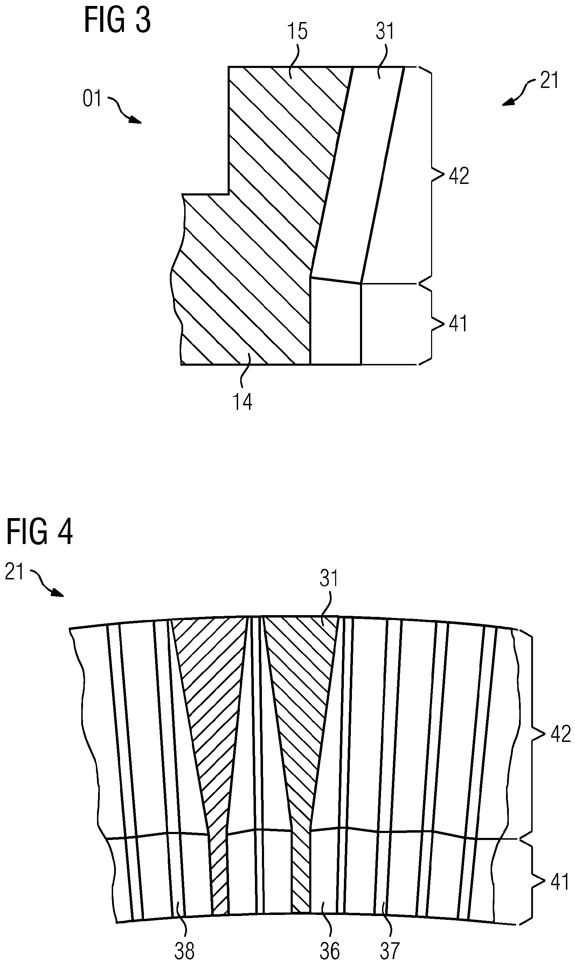

In der FIG 3 wird nunmehr im Längsschnitt durch die erste Rotorscheibe 01 ein Zahn 31 der Stirnverzahnung 21 im Detail skizziert. Zu erkennen ist der Hülsenabschnitt 14 mit dem Anschlussflansch 15, an dessen Stirnseite sich die Stirnverzahnung 21 mit dem Zahn 31 befindet. Der Zahn 31 teilt sich auf in den radial innen liegenden Zentrierabschnitt 41 und den außerhalb liegenden Sperrabschnitt 42. Hierbei ist vorgesehen, dass im Zentrierabschnitt 41 die Zahnflanken bzw. der Zahn 31 radial verläuft. Demgegenüber verläuft der Zahn im Sperrabschnitt 42 geneigt zur radialen Richtung.

Hierzu skizziert FIG 4 die Ausführungsform der Stirnverzahnung 21 im Querschnitt senkrecht zur Rotorachse durch zwei Zähne 32. Zu erkennen ist wiederum der Zentrierabschnitt 41 und radial außerhalb der Sperrabschnitt 42. Die Zahnflanken 36 der jeweiligen Zähe 31 sind symmetrisch zu einer Mittelebene durch die Rotorachse ausgeführt. Entsprechend verlaufen - bei Betrachtung dieser Ansicht längs der Rotorachse auf die Stirnverzahnung 21 - die Zahnspitzen 37 ebenso wie der jeweilige Zahngrund 38 zwischen zwei Zähnen 31 in einer radialen Richtung. Betrachtet man nunmehr den Schnitt durch die Zähe 31, so wird unmittelbar erkennbar, dass die Zahnflanken 36 im Zentrierabschnitt 41 unvermindert den radialen Verlauf aufweisen. Dem gegenüber weiten sich im Sperrabschnitt 42 die Schnittkurve des Querschnitts durch die Zähne 31 zueinander auf und weisen somit einen von radialer Richtung abweichenden Verlauf auf.

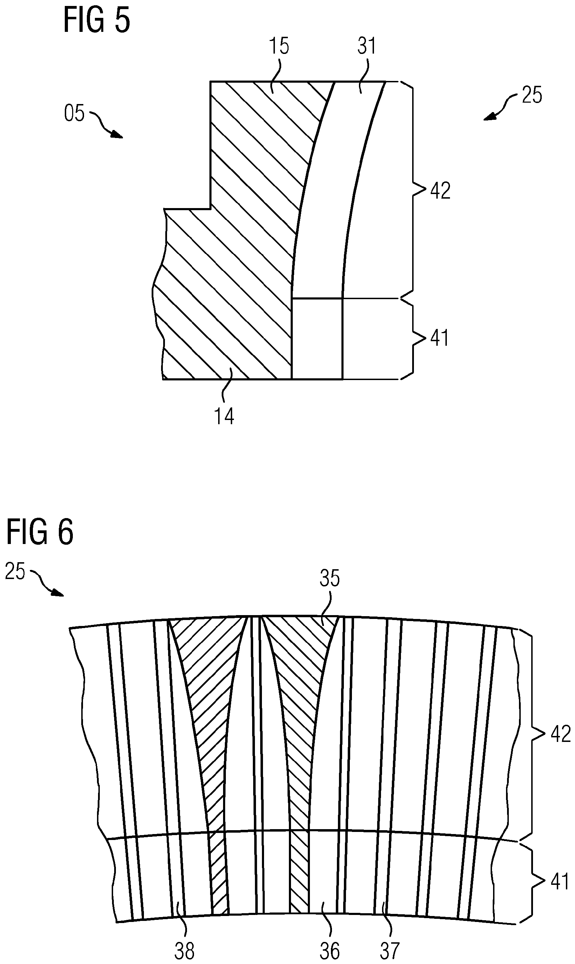

In FIG 5 wird nun ein alternatives Ausführungsbeispiel für die Formgebung der Zähe 31 skizziert. Zu erkennen ist wiederum im Längsschnitt der Hülsenabschnitt 14 mit dem Anschlussflansch 15, an dessen Stirnseite sich die Stirnverzahnung 25 befindet. Dessen Zähe 31 besitzen wiederum einen Zentrierabschnitt 41 mit radialem Verlauf sowie einen Sperrabschnitt 42. Um Gegensatz zum vorherigen Ausführungsbeispiel aus FIG 3 weisen die Zähne 31 im Längsschnitt betrachtet einen bogenförmigen Verlauf auf.

Hierzu skizziert die FIG 6 analog der FIG 4 einen Querschnitt durch die Stirnverzahnung 25 durch zwei Zähne 35. Die Zahnflanken 36 der Zähe 35 sind übereinstimmend spiegelsymmetrisch zu einer Mittelebene durch die Rotorachse gebildet. Entsprechend verlaufen unvermindert die Zahnspitzen 37 sowie der jeweilige Zahngrund 38 bei Betrachtung der Stirnverzahnung in dieser Ansicht längs der Rotorachse in radialer Richtung. Die im Querschnitt geschnittenen Zahnflanken 36, d.h. die Schnittkurven, weisen jedoch im Sperrabschnitt 42 einen von der radialen Richtung abweichenden bogenförmigen Verlauf auf.

## Patentansprüche

1. Rotorscheibe (01-05) eines Rotors, insbesondere einer Gasturbine, welche (01-05) zumindest auf einer Seite eine Stirnverzahnung (21-25) zur Drehmomentenübertragung mit einer Mehrzahl im Umfang verteilter Zähne (31,35) aufweist, deren (31,35) Zahnflanken (36) gegenüberliegend zu einer jeweiligen Mittelebene ausgerichtet sind, wobei die Zahnflanken (36) in einem Querschnitt senkrecht zur Rotorachse einen von einer radialen Richtung abweichenden Verlauf aufweisen, und wobei die Zähne (31,35) einen Zentrierabschnitt (41), dessen (41) Zahnflanken (36) sich im Wesentlichen radial erstrecken, und einen sich radial außerhalb und/oder innerhalb anschließenden Sperrabschnitt (42) aufweisen, wobei sich im Sperrabschnitt (42) der Abstand der Zahnflanken (36) abweichend vom Zentrierabschnitt (41) zueinander vergrößert oder verkleinert, **dadurch gekennzeichnet,**
**dass** die Zahnspitzen (37) im Längsschnitt betrachtet im Zentrierabschnitt (41) im Wesentlichen radial und im Sperrabschnitt (42) bogenförmig und/oder linear radial-axial in einem Winkel zum Zentrierabschnitt verlaufen.

2. Rotorscheibe (01,02) nach Anspruch 1,
**gekennzeichnet durch**
einen innen liegenden Scheibenabschnitt (11) und einen Mittelabschnitt (12), an dessen stirnseitigem Ende die Stirnverzahnung (21-15) angeordnet ist, und einen außen liegenden Befestigungsabschnitt (13), welcher im Umfang verteilt eine Mehrzahl, sich insbesondere axial erstreckender, Schaufelhaltenuten aufweist.

3. Rotorscheibe (01-05) nach Anspruch 1 oder 2,
**gekennzeichnet durch**
einen sich axial erstreckenden Hülsenabschnitt (14) und einen sich daran (14) radial nach innen und/oder nach außen erstreckenden Anschlussflansch (15), an dessen (15) Stirnseite die Stirnverzahnung (21-25) angeordnet ist.

4. Rotorscheibe (01-05) nach Anspruch 3,
**dadurch gekennzeichnet,**
**dass** im Anschlussflansch (15) im Umfang verteilt eine Mehrzahl Befestigungsbohrungen (16) vorhanden ist.

5. Rotorscheibe (01-05) nach einem der Ansprüche 1 bis 4,
**dadurch gekennzeichnet,**
**dass** die Zahnspitze eines jeweiligen Zahns radial zur Rotorachse verläuft; und/oder
**dass** die beiden Zahnflanken eines jeweiligen Zahns spiegelsymmetrisch zur Mittelebene sind.

6. Rotorscheibe (01-05) nach einem der Ansprüche 1 bis 5,
**dadurch gekennzeichnet,**
**dass** die Zähne (31,35) im Zentrierabschnitt (41) eine Hirth-Verzahnung bilden.

7. Rotorscheibe (01-05) nach Anspruch 6,
**dadurch gekennzeichnet,**
**dass** im Sperrabschnitt (42) die Zahnflanken (36) im Querschnitt einen bogenförmigen Verlauf aufweisen; und/oder dass im Sperrabschnitt (42) die Zahnflanken (36) im Querschnitt einen linearen Verlauf aufweisen.

8. Rotorscheibe (01-05) nach einer der Ansprüche 1 bis 7,
**dadurch gekennzeichnet,**
**dass** die Zahnspitzen im Sperrabschnitt mindestens 0,25° linear geneigt gegenüber dem Zentrierabschnitt verlaufen; und/oder
**dass** die Zahnspitzen im Sperrabschnitt maximal 15° linear geneigt gegenüber dem Zentrierabschnitt verlaufen.

9. Rotor, insbesondere einer Gasturbine, mit einer ersten Rotorscheibe (01,03,05) nach einer der vorhergehenden Ansprüche und mit einer zweiten Rotorscheibe (02,04,05) nach einer der vorhergehenden Ansprüche, deren (01-05) Stirnverzahnungen (21-25) ineinandergreifend angeordnetsind.

10. Rotor nach Anspruch 9,
**dadurch gekennzeichnet,**
**dass** die Rotorscheiben (01-05) nach einer der Ansprüche 4 bis 8 mittels einer Mehrzahl die Befestigungsbohrungen (16) des ersten Anschlussflansches (15) und/oder des zweiten Anschlussflansches (15) durchdringender Befestigungsbolzen verbunden sind.

11. Rotor nach Anspruch 9 oder 10,
**dadurch gekennzeichnet,**
**dass** bei Auflage der ersten Zahnflanken (36) an den zweiten Zahnflanken (36) im Zentrierabschnitt (41) zwischen den ersten Zahnflanken (36) und den zweiten Zahnflanken (36) im Sperrabschnitt (42) ein Spalt (28,29) vorhanden ist.

12. Rotor nach Anspruch 11,
**dadurch gekennzeichnet,**
**dass** der Spalt (28,29) im Sperrabschnitt mindestens 0,01 mm, und/oder maximal 2 mm beträgt.

13. Rotor nach Anspruch 11 oder 12,
**dadurch gekennzeichnet,**
**dass** der Spalt (29) nach radial außen hin kontinuierlich größer wird; und/oder
**dass** der Spalt (29) nach im Wesentlichen konstant ist; und/oder
**dass** der Spalt (29) im Bereich der Befestigungsbolzen größer ist als im Bereich zwischen zwei Befestigungsbolzen.

## Claims

1. Rotor disk (01-05) of a rotor, in particular of a gas turbine, which (01-05) has serrations (21-25), at least on one side, for torque transmission, comprising a plurality of teeth (31,35) distributed over the circumference, the tooth flanks (36) of which (31,35) are aligned opposite with respect to a respective central plane, wherein the tooth flanks (36) have a course that deviates from a radial direction in a cross section perpendicular to the rotor axis, and wherein the teeth (31,35) have a centering portion (41), the tooth flanks (36) of which (41) extend substantially radially, and a locking portion (42) adjoining radially on the outside and/or on the inside, wherein the spacing of the tooth flanks (36) relative to one another increases or decreases in the locking portion (42), deviating in this respect from the centering portion (41),
**characterized**
**in that** the tooth tips (37) extend substantially radially in the centering portion (41) and in an arc shape and/or in a linear radial-axial direction at an angle to the centering portion in the locking portion (42), when viewed in longitudinal section.

2. Rotor disk (01,02) according to Claim 1,
**characterized by**
an inner disk portion (11) and a central portion (12), on the front end of which the serrations (21-25) are arranged, and an outer fastening portion (13), which has a plurality of blade retention grooves, in particular axially extending blade retention grooves, distributed over the circumference.

3. Rotor disk (01-05) according to Claim 1 or 2,
**characterized by**
an axially extending sleeve portion (14) and a connection flange (15), which extends radially inward and/or outward on said sleeve portion (14) and on the front face of which (15) the serrations (21-25) are arranged.

4. Rotor disk (01-05) according to Claim 3,
**characterized**
**in that** there is a plurality of fastening holes (16) distributed over the circumference in the connection flange (15) .

5. Rotor disk (01-05) according to one of Claims 1 to 4,
**characterized**
**in that** the tooth tip of each tooth extends radially with respect to the rotor axis; and/or
**in that** the two tooth flanks of each tooth are mirror-symmetrical with respect to the central plane.

6. Rotor disk (01-05) according to one of Claims 1 to 5,
**characterized**
**in that** the teeth (31,35) form a set of Hirth-type serrations in the centering portion (41)

7. Rotor disk (01-05) according to Claim 6,
**characterized**
**in that** the tooth flanks (36) have an arc-shaped course in cross section in the locking portion (42); and/or
**in that** the tooth flanks (36) have a linear course in cross section in the locking portion (42).

8. Rotor disk (01-05) according to one of Claims 1 to 7,
**characterized**
**in that** the tooth tips in the locking portion slope by at least 0.25° linearly relative to the centering portion; and/or in that the tooth tips in the locking portion slope by at most 15° linearly relative to the centering portion.

9. Rotor, in particular of a gas turbine, having a first rotor disk (01,03,05) according to one of the preceding claims and having a second rotor disk (02,04,05) according to one of the preceding claims, the sets of serrations (21-25) of which (01-05) are arranged so as to engage in one another.

10. Rotor according to Claim 9,
**characterized**
**in that** the rotor disks (01-05) according to one of Claims 4 to 8 are connected by means of a plurality of fastening bolts passing through the fastening holes (16) in the first connection flange (15) and/or the second connection flange (15) .

11. Rotor according to Claim 9 or 10,
**characterized**
**in that**, when the first tooth flanks (36) are resting on the second tooth flanks (36) in the centering portion (41), there is a gap (28,29) between the first tooth flanks (36) and the second tooth flanks (36) in the locking portion (42).

12. Rotor according to Claim 11,
**characterized**
**in that** the gap (28,29) in the locking portion is at least 0.01 mm, and/or at most 2 mm.

13. Rotor according to Claim 11 or 12,
**characterized**
**in that** the gap (29) becomes continuously larger radially toward the outside; and/or
**in that** the gap (29) is substantially constant; and/or
**in that** the gap (29) is larger in the region of the fastening bolts than in the region between two fastening bolts.

## Revendications

1. Disque (01 à 05) d'un rotor, notamment d'une turbine à gaz, qui (01, 05) a au moins d'un côté une denture (21 à 25) frontale de transmission de couple, en ayant une pluralité de dents (31, 35) réparties sur le pourtour, dont les flancs (36) de dent sont dirigés en faisant face à un plan médian respectif, les flancs (36) de dent ayant, dans une section transversale perpendiculaire à l'axe de rotation, un tracé s'écartant d'une direction radiale et dans lequel les dents (31, 35) ont une partie (41) de centrage, dont (41) les flancs (36) de dent s'étendent sensiblement radialement et une partie (42) de blocage se raccordant à l'extérieur et/ou à l'intérieur radialement, dans lequel, dans la partie (42) de blocage, la distance des flancs (36) de dent entre eux s'agrandit ou diminue, en s'écartant de la partie (41) de centrage,
**caractérisé**
**en ce que** les pointes (37) des dent s'étendent, considérées en coupe longitudinale, dans la partie (41) de centrage sensiblement radialement et dans la partie (42) de blocage radialement-axialement, en formant un arc et/ou linéairement en faisant un angle avec la partie de centrage.

2. Disque (01, 02) de rotor suivant la revendication 1,
**caractérisé**
**par** une partie (11) de disque se trouvant à l'intérieur et par une partie (12) médiane, à l'extrémité du côté frontal de laquelle la denture (21 à 25) frontale est disposée et par une partie (13) de fixation se trouvant à l'extérieur, qui a, répartie sur le pourtour, une pluralité de rainures de retenue d'aube s'étendant notamment axialement.

3. Disque (01 à 05) de rotor suivant la revendication 1 ou 2,
**caractérisé**
**par** une partie (14) de manchon s'étendant axialement et une bride (15) de raccordement s'étendant vers l'intérieur et/ou vers l'extérieur radialement sur le côté frontal de laquelle (15) est disposée la denture (21 à 25) frontale.

4. Disque (01 à 05) de manchon suivant la revendication 3,
**caractérisé**
**en ce qu'**une pluralité de trous (16) de fixation sont répartis sur le pourtour dans la bride (15) de raccordement.

5. Disque (01 à 05) de manchon suivant l'une des revendications 1 à 4,
**caractérisé**
**en ce que** les pointes d'une dent respective s'étendent radialement par rapport à l'axe du rotor et/ou en ce que les deux flancs d'une dent respective sont symétriques, comme en un miroir, par rapport au plan médian.

6. Disque (01 à 05) de manchon suivant l'une des revendications 1 à 5,
**caractérisé**
**en ce que** les dents (31, 35) forment, dans la partie (41) centrale, une denture Hirth.

7. Disque (01 à 05) de manchon suivant la revendication 6,
**caractérisé**
**en ce que** dans la partie (42) de blocage, les flancs (36) de dent ont, en coupe transversale, un tracé en forme d'arc et/ou en ce que, dans la partie (42) de blocage, les flancs (36) de dent ont, en section transversale, un tracé linéaire.

8. Disque (01 à 05) de manchon suivant l'une des revendications 1 à 7,
**caractérisé**
**en ce que** les pointes de dent s'étendent en étant inclinées linéairement d'au moins 0,25° par rapport à la partie de centrage
et/ou
**en ce que** les pointes de dent s'étendent dans la partie de blocage en étant inclinées linéairement au maximum de 15° par rapport à la partie de centrage.

9. Rotor, notamment d'une turbine à gaz, comprenant un premier disque (01, 03, 05) de rotor suivant l'une des revendications précédentes et un deuxième disque (02, 04, 05) de rotor suivant l'une des revendications précédentes, dont les dentures (21 à 25) frontales engrènent l'une avec l'autre.

10. Rotor suivant la revendication 9,
**caractérisé**
**en ce que** les disques (01, 03, 05) du rotor, suivant l'une des revendications 4 à 8, sont reliés au moyen d'une pluralité de boulons de fixation passant dans les trous (16) de fixation de la première bride (15) de raccordement et/ou de la deuxième bride (15) de raccordement.

11. Rotor suivant la revendication 9 ou 10,
**caractérisé**
**en ce que** lors de l'application des premiers flancs (36) de dent aux deuxièmes flancs (36) de dent, de la partie (41) de centrage, il y a un intervalle (28, 29) entre les premiers flancs (36) de dent et les deuxièmes flancs (36) de dent de la partie (42) de blocage.

12. Rotor suivant la revendication 11,
**caractérisé en ce que** l'intervalle (28, 29) dans la partie de blocage est d'au moins 0,01 mm et/ou au maximum de 2 mm.

13. Rotor suivant la revendication 11 ou 12,
**caractérisé**
**en ce que** l'intervalle (29) devient continuellement plus grand vers l'extérieur radialement et/ou
**en ce que** l'intervalle (29) est sensiblement constant et/ou en ce que l'intervalle (29) est plus grand dans la partie des boulons de fixation que dans la partie entre deux boulons de fixation.
